# EUROPEAN PATENT SPECIFICATION

(11) **EP 3 304 649 B1**
(45) Date of publication and mention of the grant of the patent: **30.08.2023**
(21) Application number: 16728668.1
(22) Date of filing: 07.06.2016
(51) Int. Cl.: C23C 4/08, C23C 4/18, C23C 24/08, H01R 4/02, H01R 4/62, H01R 43/02, B23K 35/28, B23K 35/02, B23K 35/30, B23K 35/365, B32B 15/20, B23K 20/10, B23K 20/233, B23K 20/24, H01R 43/28, B23K 101/32, B23K 103/10, B23K 103/12, B23K 103/18, B23K 101/38

(54) **METHOD FOR CONNECTING A CONDUCTOR COMPRISING A BASE METAL TO A TERMINAL ELEMENT COMPRISING COPPER BY MEANS OF WELDING**
VERFAHREN ZUM VERBINDEN EINES LEITERS MIT EINEM BASISMETALL AN EINEM ANSCHLUSSELEMENT MIT KUPFER DURCH SCHWEISSEN
PROCÉDÉ DE CONNEXION D'UN CONDUCTEUR COMPRENANT UN MÉTAL DE BASE À UN ÉLÉMENT FORMANT BORNE AU MOYEN D'UN SOUDAGE

(30) Priority: 08.06.2015 DE 102015210458
(43) Date of publication of application: 11.04.2018
(73) Proprietor: TE Connectivity Germany GmbH, 64625 Bensheim (DE)
(72) Inventor: GREGOR, Christian, 64673 Zwingenberg (DE)
(74) Representative: Grünecker Patent- und Rechtsanwälte PartG mbB
(86) International application number: PCT/EP2016/062899
(87) International publication number: WO 2016/198399

(56) References cited:
- EP-A1- 2 533 365
- EP-A1- 2 533 365
- JP-A- 2007 305 314
- US-A1- 2004 124 180
- US-A1- 2008 155 823
- US-A1- 2008 155 823
- US-A1- 2011 220 385
- US-A1- 2013 048 616
- US-A1- 2014 110 166
- US-A1- 2014 110 166
- Anonymous: "Section XV - Base metals and articles of base metal", , 30 November 2015 (2015-11-30), pages 1-38, XP055907365, Retrieved from the Internet: URL:https://www150.statcan.gc.ca/n1/pub/65 -209-x/2015000/part-partie15-eng.htm [retrieved on 2022-03-30]

## Description

The present invention relates to a method for connecting a conductor being part of an electric wire and comprising a base metal to a terminal element comprising copper.

For weight and cost reasons, cable harnesses and plug-in connectors are increasingly being miniaturised in the automotive industry. The cable harnesses and the terminal elements in plug-in connections are traditionally produced from copper or a copper alloy. However, copper is very heavy and is relatively expensive. Therefore the focus in the automotive industry is increasingly on alternative conductor materials which are lighter and more economical than copper, for example conductors made of base metals.

However, when connecting conductors comprising a base metal to a terminal element which comprises copper, it is difficult to produce a reliable mechanical and electrical connection between conductors and terminal elements. On the one hand, mechanically connecting a conductor and a terminal assembly which consist of different metals or metal alloys is problematic, in particular in view of the strict requirements set for plug-in connectors in the automotive industry. These are exposed to high physical stresses and therefore have to withstand high forces. On the other hand, the connection of a terminal element comprising copper to a conductor comprising a base metal is electrochemically problematic because the point of contact of copper to the base metal is at risk of corrosion. Corrosion not only weakens the mechanical connection, but also makes it difficult to transport charge if the oxide layer formed is insulating.

EP 2 533 365 A1 discloses a connection structural body in which an electric wire and a crimp terminal formed of different metal materials are connected to each other, and which is produced at low cost and with a small number of production steps, prevents galvanic corrosion, and has a conducting function with certainty. In a connection structural body, an aluminum electric wire tip part and a crimp terminal are connected to each other. The aluminum electric wire tip part is an exposed tip part of an insulated wire including an aluminum core wire and an insulating cover for covering the aluminum core wire, and is exposed as a result of being stripped of the insulating cover. The crimp terminal includes a wire barrel section for pressure-bonding and thus connecting the aluminum electric wire tip part and is formed of a metal material having a higher potential than that of the aluminum core wire. The aluminum electric wire tip part is covered with a cover solder or with the cover solder and a cover resin. The aluminum electric wire tip part is pressure-bonded and thus connected to the wire barrel section, such that the aluminum electric wire tip part is, in a pressure-bonded state, covered with the cover and/or the cover reins, with no gap, from an insulating cover tip part of the insulating cover to a rear end portion of the wire barrel section.

US 2008/0155 823 A1 refers to a method for connecting at least one wire to a contact element to facilitate connection of the wire to a power source comprising the following steps: a) preparation of the contact element which is fitted with a groove for receiving at least one wire; b) insertion of the wire into the groove of the contact element; c) lowering an electrode onto the contact element; and d) heating of the area around the groove by means of the electrode while simultaneously deforming the area around the groove thereby embedding the wire lying in said groove.

US 2011/0220385 A1 discloses the preamble of claim 1, disclosing also a connection of electrical cables comprising a connecting cable formed from aluminium strands and a metal connecting part. Contact corrosion is prevented when the welding takes place by firmly bonding the connecting cable to the connecting part by means of ultrasonic welding in such a way that a sealant which is displaced between the connecting cable and the connecting part during the ultrasonic welding is situated between the aluminium strands.

JP 2007 305314 A discloses a cable having a terminal that is made of a material different from that of the cable. A copper terminal and a cable with an aluminum twisted wire are welded by ultrasonic welding via a clad plate. The clad plate is disposed between the aluminum twisted wire and the terminal, and has an aluminum layer facing the aluminum twisted wire and a copper layer facing the terminal.

US 2004/0124180 A1 discloses a process for joining a steel terminal to a copper electrode comprises applying a thin silver-copper flash to the surface of a copper electrode and bringing a steel surface into contact with the flash during high frequency welding.

The problem of the present invention is thus to reliably connect a conductor comprising a base metal to a terminal element comprising copper both mechanically and in an electrically conductive manner such that the terminal assembly made up of the conductor and the terminal element connected thereto satisfies the strict requirements for use in the automotive industry. The present invention solves this problem through a method for connecting a conductor comprising a base metal to a terminal element comprising copper, wherein the base metal is a metal which has, in the electrochemical voltage series, a standard electrode potential which is smaller than the standard electrode potential of hydrogen, and wherein the conductor and/or the terminal element is coated, at least at the weld joint, with an adhesive layer of a copper alloy or a mixture comprising copper and at least one base metal, before the conductor and the terminal element are welded onto one another. A terminal assembly produced by this method includes a conductor comprising a base metal, and a terminal element which is welded to the conductor and which comprises copper, wherein the weld seam has a layer of a copper alloy or of a mixture comprising copper and at least one base metal.

The solution according to the invention improves the connection of a conductor comprising a base metal to a terminal element comprising copper, both in mechanical terms and in terms of the electrical conduction. By coating with a copper alloy or with a mixture comprising copper and at least one base metal, a connecting layer is applied at the weld joint, i.e. in the region in which the welding parts are joined together, i.e. in the weld seam. This connecting layer improves the connection of the conductor to the terminal element both mechanically and in terms of electrical conductivity. The coating protects the region of the conductor which is connected to the terminal element from the formation of an insulating corrosion layer which impedes the electron transport across the surface as a conductor current from the conductor onto the terminal element. The base metal is present together with copper in the applied coating, either in a mixture or a copper alloy, such that corrosion occurs, if at all, at most partially and not across the surface. Furthermore, the coating according to the invention improves the mechanical connection between the conductor and the terminal element because it improves the suitability for welding and the weld connection quality.

"Base metal" should be understood to be all metals which have, in the electrochemical voltage series, a standard electrode potential which is smaller than the standard electrode potential of hydrogen.

"Weld joint" should be understood to be the region in which the welded parts, the conductor and the terminal element in this case, are welded together. "Welding" should be understood to mean the permanent connection of components by applying heat and/or pressure. The "weld seam" is the location at which the parts are welded together.

The solution according to the invention can be further improved by the following individually advantageous embodiments which are able to be combined with one another as desired. These embodiments and the associated advantages shall be explored hereafter. The following features can be realised both with the method according to the invention and with the terminal element produced by said method.

In a first embodiment of the method according to the invention, the conductor comprises aluminium as the base metal. In this case, the conductor can consist of aluminium or an aluminium alloy. Aluminium has the advantage that it is very light, such that with aluminium wires it is possible to obtain a substantial reduction in the weight of the cable harness. Furthermore, aluminium can be processed well and is relatively inexpensive.

Compared to copper wires, conductors comprising aluminium or which consist of aluminium or an aluminium alloy, or conductors which comprise another base metal or consist of it or an alloy thereof, have poorer conductivity. In order to compensate for this, the conductor can have a conductor cross-section of 5 to 120 mm². For example, the conductor can have a cross-section of 6 to 80 mm², such as a conductor cross-section from 30 to 40 mm², for example. With such a conductor cross-section, sufficient conductivity is guaranteed while also making savings in weight.

In a further embodiment, the terminal element is coated. The terminal element can for example be a contact element of a plug-in connector. Such terminal elements or contact elements are usually produced in this way as stamped bent parts. Firstly, the outer contour of the terminal element is stamped out of a strip-shaped contact material, with several terminal elements being produced from one strip and still being connected to one another at first in a prestamped strip. In this stage in which the individual terminal elements, for example contact elements, are stamped out but are still connected to one another via the prestamped strip, the weld joint provided at the terminal element can be particularly easily coated, for example by the individual terminal elements of the strip being successively and continuously fed through a coating zone.

According to a further embodiment, the mixture which is applied according to the method according to the invention to the weld joint as a coating has at least one base metal selected from the group comprising zinc, aluminium, tin, iron, nickel, manganese and oxides of the aforementioned metals. In a different embodiment, coating is performed with a copper alloy or the weld seam has a copper alloy selected from the group comprising CuSn, CuZnₓSn_{y}, CuFe, CuNiSi, CuAl_{xy} and brass. Such mixtures or copper alloys can be applied well onto a conductor comprising a base metal or a terminal element comprising copper, as coating materials.

According to one embodiment, the copper alloy can be brass and the zinc content of the brass can be between 10 and 70%. For example, the zinc content of the brass can be between 20 and 40%, such as between 28 and 32%. Such brass coatings adhere well to a carrier substrate, for example to a surface comprising copper or a copper alloy. Furthermore, these brass coatings display good plastic deformability, which opens up multiple coating methods for coating them on the carrier substrate.

The brass coating can comprise lead and/or at least one further alloy element. The at least one further alloy element can be selected from the group of aluminium, iron, manganese, nickel, silicon and tin. In this manner, the brass to be applied, or the brass coating, can be individually adapted to the requirements for the contact arrangement to be produced or substrate to be coated and/or the materials of the conductor to be connected and terminal element.

According to a further embodiment, a solid, preferably a powder is applied for coating. By "coating" here, we mean the application of a firmly adhering layer of formless material onto the surface of a carrier material. The layer which arises is the "coating". A coating with a solid coating material has the advantage that it can generally be carried out continuously, with the substrates to be coated, for example a terminal element, being fed successively through a coating zone.

In a further embodiment, the powder can have a particle size of up to 60 µm. For example, the powder can have a particle size of 1 to 50 µm, such as 1 to 35 µm. Such particle sizes allow a uniform coating of sufficient thickness to be applied across the surface.

According to a further embodiment, the coating can be applied by means of thermal spraying. Thermal spraying comprises surface coating methods in which the coating materials are introduced in the form of spray particles into a gas jet, are accelerated in the gas jet and are hurled onto the surface of the component to be coated. In the process, a layer is formed by the spray particles being flattened when they impact on the component surface and mainly remain adhered by mechanical clamping. The gas jet is in this case generally heated, depending on the method, to temperatures at which the spray particles in the gas jet can be fused, surface-fused or joined by fusing. Thermal spraying has the advantage that the substrate surface, i.e. the conductor and/or the terminal element, is not surface-fused and is only thermally stressed to a very minor degree.

For example, the coating can be applied by means of cold gas spraying. Cold gas spraying is a coating method, in which the coating material is applied onto the carrier material at high speed. For this purpose, a heated process gas is accelerated by expansion in a nozzle and the coating material is injected into the gas jet. Due to the high speed, which can be the speed of sound, a firmly adhering layer can be formed even when there is no surface-fusing or joining by fusion of the coating material when impacting on the substrate. A coating by means of thermal spraying, for example by means of cold gas spraying, has the advantage that it can be performed continuously, by the gas jet, including the coating particles, being directed onto the zones which are to be coated. The components to be coated, for example terminal elements, can be guided successively through a stationary gas jet or the gas jet can be moved, one after the other, over the weld joints, which are to be coated, of individual conductors and/or terminal elements.

According to a further embodiment, the conductor and the terminal element can be friction welded. For example, the conductor and the terminal element can be welded together by means of ultrasonic welding. This type of welding offers the advantage that it can be performed continuously, that it allows different materials to be connected to one another well, and that the tools in the welding region are only slightly heated. In addition, faster weldings are possible with these methods, so that the terminal assemblies can be produced at faster rates.

Hereinafter, the solution according to the invention is explained in greater detail by way of example using advantageous embodiments with reference to the drawings. The developments and advantageous embodiments described therein are respectively independent of one another and can be combined with one another as desired.

The drawings show:
- Fig. 1: a schematic longitudinal section of an electrical wire (A), a schematic cross-section of an electrical wire (B) and a schematic depiction of a terminal element before and during coating (C);
- Fig. 2: a schematic cross-section of a terminal assembly during and after welding of the conductor and the terminal assembly;
- Fig. 3: a surface picture of a coating according to one embodiment; and
- Fig. 4: a surface picture of a coating according to another embodiment.

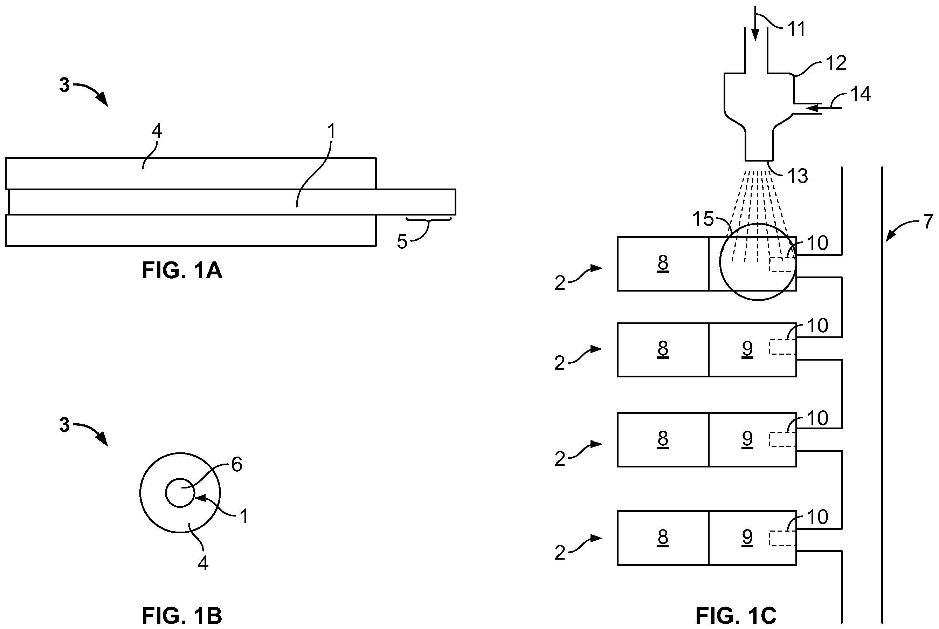

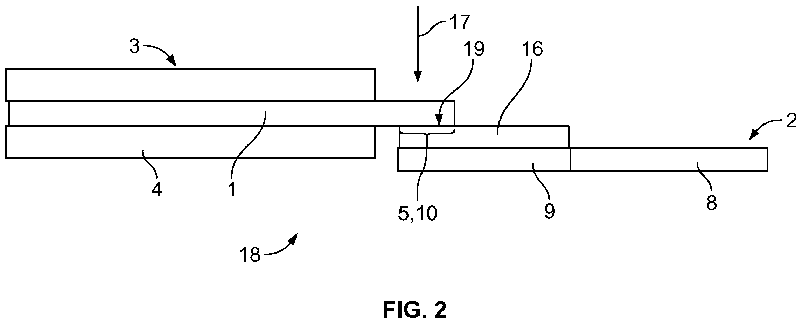

Hereafter, an embodiment of the method according to the invention is described with reference to Figs. 1 and 2.

The method serves to connect an electrical conductor 1 to a terminal element 2.

The electrical conductor 1 is depicted schematically in longitudinal section and in cross-section in the Figures. The conductor 1 is part of an electrical wire 3 and is located in an insulating cover 4. At one end, the cover 4 of the electrical wire 3 is removed, so that the conductor 1 is exposed at this end. The region of the exposed conductor 1 which is welded to the terminal element later is the weld joint 5 at the conductor.

The conductor 1 can comprise aluminium. For example, the conductor 1 can consist of aluminium or an electrically conductive aluminium alloy. The conductor 1 can have a conductor cross-section 6 from 5 to 120 mm², for example from 6 to 80 mm², such as 30 to 40 mm² for example. Fig. 1B shows a schematic cross-section of the electrical wire 3. It can be seen here that the conductor 1 in the exemplary embodiment has a round cross-section 6. The conductor 1 can however just as well have any n-sided, an oval or any other cross-section.

Fig. 1C further schematically shows a terminal element 2. In the embodiment shown, a prestamped strip 7 is shown with terminal elements 2 which have been stamped in one piece out of a metal sheet, in a manner which makes them able to be handled.

In the figures, the terminal element 2 is only depicted schematically. The terminal element has a contact section 8 and a terminal section 9. The contact section 8 is the region with which the terminal element 2 is later electrically contacted by a mating plug element, for example as a part of an electrical plug connector. The terminal region 9 is the part with which the terminal element 2 is connected to the conductor 1. The terminal region 9 comprises a weld joint 10 at the terminal element, at which the terminal element 2 is welded to the electrical conductor 1.

The terminal element 2 comprising copper can for example be a contact element of a plug-in connector. In order to improve the welding of the terminal element 2 comprising copper to the conductor 1 comprising a base metal, a layer made up of a copper alloy or a mixture comprising copper and at least one base metal is applied according to the invention at least at a weld joint 5, 10, before the conductor 1 and the terminal element 2 are welded together. In the exemplary embodiment shown in the figures, the terminal element 2 is coated. For this purpose, in the embodiment shown the terminal section 9 of the terminal element 2 is coated at least in sections, in particular in the region of the weld joint 10 at the terminal element.

The coating process is schematically depicted on the right side of Fig. 1. In the embodiment shown, a solid coating material 14 is applied, for example in the form of a powder having a particle size for example up to 60 µm, such as a particle size from 1 to 50 µm, e.g. a particle size from 1 to 35 µm.

The coating 16 can be applied by means of thermal spraying. In the embodiment shown, the coating is applied by means of cold gas spraying. For this purpose, a gas jet 11 is introduced into a spray nozzle 12, heated up in the spray nozzle, accelerated and pressed out through the nozzle outlet 13.

The coating material 14 is injected into the gas jet 11 as a solid, for example a powder. The injected spray particles are accelerated in the gas jet 11 and applied onto the terminal section 9 of a terminal element 2. In this manner, the coating zone 15, within which the spray particles are applied onto the substrate, can be restricted to the desired regions of the terminal element 2.

A coating by means of thermal spraying, for example by means of the cold gas spraying shown in Fig. 1, has the advantage that it can be performed continuously. To do so, for example, either the coating zone 15 of the nozzle 12 can be guided successively over the weld joints 10 (at the terminal element) of the terminal sections 9 of the terminal element 2 of the prestamped strip 7. Alternatively, the treatment zone 15 of the nozzle 12 could be stationary and the individual terminal elements 2 within a strip 7 can be successively guided through the coating zone 15 by their areas which are to be coated.

The coating material 14 can have a mixture comprising copper and at least one base metal. The base metal of the mixture can, for example, be selected from the group comprising zinc, aluminium, tin, iron, nickel, manganese and oxides of the aforementioned metals.

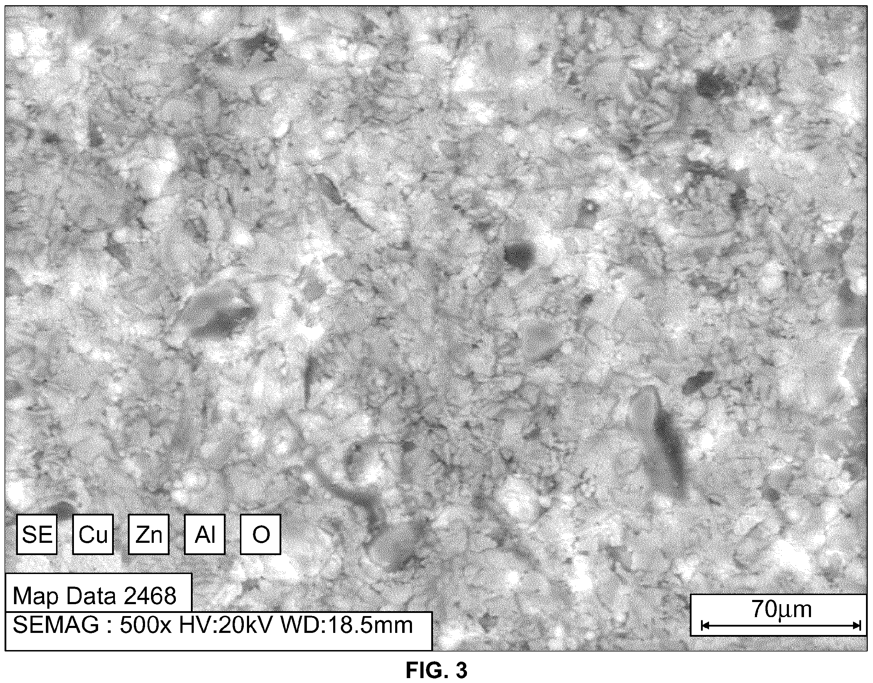

For example, the mixture can have alumina powder, zinc powder and copper powder. Such a mixture forms a well-adhering coating on a terminal element 2 as a carrier material. For example, Fig. 3 shows a picture of a scanning electron microscope of a coating of a mixture made up of 40% zinc powder (purity 96%), 30% alumina powder (purity 99.4%) and 30% copper powder (purity 99.5%). In the scanning electron microscope picture in Fig. 3 it can be clearly recognised that both copper and the base metals zinc and aluminium are contained, uniformly distributed, in the coating.

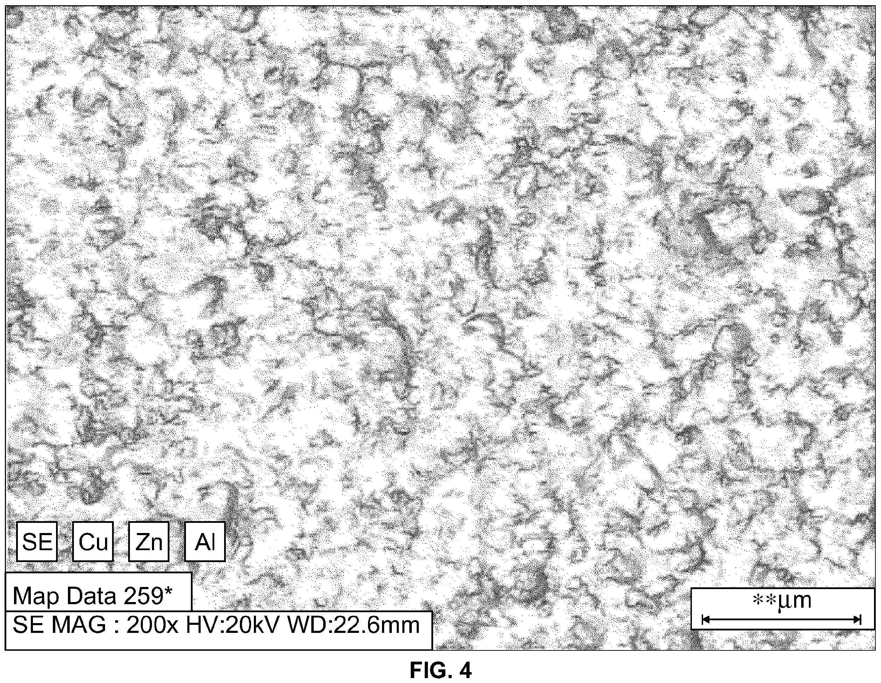

A further surface coating can be seen in the scanning electron microscope picture in Fig. 4. In this, instead of the abovementioned mixture, the powder of a brass alloy was applied, by means of cold gas spraying, onto a terminal element having CuSn0.15 base material. The brass powder has a copper content of 70%, a zinc content of 30% and has a particle size of smaller than <32 µm. Fig. 4 also makes it clear that both copper and zinc are uniformly distributed in the coating as base metal and are applied on the carrier in a well adhering manner.

Instead of brass, it is also possible to use any desired other copper alloy comprising copper and a base metal. For example, a copper alloy selected from the group comprising CuSn, CuZnₓSn_{y}, CuFe, CuNiSi, CuAl_{xy} can be applied. If coating takes place with brass, the applied brass can have lead or at least one further alloy element. The at least one further alloy element can be selected from the group of aluminium, iron, manganese, nickel, silicon and tin.

After the copper alloy or the mixture has been applied as the coating 16 at least at the weld joint 5 at the conductor and/or at the weld joint 10 at the terminal element, the weld joint 5 at the conductor and the weld joint 10 at the terminal element are brought together and the conductor 1 and the terminal element 2 are welded there. The welding process is depicted schematically in Fig. 2 by an arrow 17.

During welding, a terminal assembly 18 is created, the weld seam 19 of which has a layer of a copper alloy or of a mixture comprising copper and at least one base metal.

The conductor 1 and the terminal element 2 can be friction-welded, for example welded by means of ultrasonic welding. For this purpose, a mechanical ultrasonic vibration is generated in the high-frequency range, generally from 20 to 35 kHz, and is introduced into the joining partners, in this case the conductor 1 and the terminal element 2. The high-frequency mechanical vibration leads to heating by boundary friction and results in a serration and hooking of the joining partners. As a result, a mechanically reliable connection can be generated between a conductor 1 comprising a base metal, for example aluminium, and a terminal element 2 comprising copper. The weld connection is more reliable and capable of withstanding higher tractive and peeling forces than is the case with a direct welding without the coating according to the invention.

### List of reference signs:

- 1: Conductor
- 2: Terminal element
- 3: Electrical wire
- 4: Cover
- 5: Weld joint at the conductor
- 6: Conductor cross-section
- 7: Prestamped strip of terminal elements
- 8: Contact section
- 9: Terminal section
- 10: Weld joint at the terminal element
- 11: Gas jet
- 12: Nozzle
- 13: Nozzle outlet
- 14: Coating material
- 15: Coating zone
- 16: Coating
- 17: Welding process
- 18: Terminal assembly
- 19: Weld seam

## Claims

1. A method for connecting a conductor (1) being part of an electric wire (3) and comprising a base metal to a terminal element (2) comprising copper, wherein the base metal is a metal which has, in the electrochemical voltage series, a standard electrode potential which is smaller than the standard electrode potential of hydrogen, and wherein the conductor (1) and/or the terminal element (2) is coated, at least at the weld joint (5, 10), before the conductor (1) and the terminal element (2) are welded onto one another,
**characterized in that**
the coating is done by applying a firmly adhering layer of a copper alloy or a mixture comprising copper and at least one base metal.

2. The method according to claim 1, wherein the terminal element (2) is coated.

3. The method according to claim 1 or 2, wherein a solid (14), preferably a powder is applied for coating.

4. The method according to claim 3, wherein the powder has a particle size of up to 60 µm, preferably from 1 to 50 µm and particularly preferably from 1 to 35 µm.

5. The method according to any one of claims 1 to 4, wherein the coating (16) is applied by means of thermal spraying.

6. The method according to claim 5, wherein the coating (16) is applied by means of cold gas spraying.

7. The method according to any one of claims 1 to 6, wherein the conductor (1) and the terminal element (2) are friction-welded, preferably welded by means of ultrasonic welding.

8. The method according to any one of claims 1 to 7, wherein the conductor (1) comprises aluminium, wherein the conductor preferably consists of aluminium or an aluminium alloy.

9. The method according to any one of claims 1 to 8, wherein the conductor (1) has a conductor cross-section (6) of 5 to 120 mm², preferably of 6 to 80 mm², and particularly preferably of 30 to 40 mm².

10. The method according to any one of claims 1 to 9, wherein the mixture has at least one base metal selected from the group comprising zinc, aluminium, tin, iron, nickel, manganese and oxides of the aforementioned metals.

11. The method according to any one of claims 1 to 9, wherein the copper alloy is selected from the group comprising CuSn, CuZnₓSn_{y}, CuFe, CuNiSi, CuAl_{xy} and brass.

12. The method according to claim 11, wherein the copper alloy is brass and the zinc content of the brass is between 10% and 70%, preferably between 20% and 40% and particularly preferably at 28 to 32%.

13. The method according to claim 11 or 12, wherein the brass comprises lead and/or at least one further alloy element.

14. The method according to claim 13, wherein the at least one further alloy element is selected from the group of aluminium, iron, manganese, nickel, silicon and tin.

## Patentansprüche

1. Verfahren zum Verbinden eines Leiters (1), der Teil eines elektrischen Drahtes (3) ist und ein unedles Metall umfasst, mit einem Anschlusselement (2) aus Kupfer, wobei das unedle Metall ein Metall ist, das in der elektrochemischen Spannungsreihe ein Standardpotential hat, das niedriger ist als das Standardpotential von Wasserstoff, und der Leiter (1) und/oder das Anschlusselement (2) wenigstens an der Schweißverbindung (5, 10) beschichtet werden/wird, bevor der Leiter (1) und das Anschlusselement (2) aneinander geschweißt werden, **dadurch gekennzeichnet, dass** das Beschichten ausgeführt wird, indem eine fest haftende Schicht aus einer Kupferlegierung oder einem Gemisch aus Kupfer und wenigstens einem unedlen Metall aufgebracht wird.

2. Verfahren nach Anspruch 1, wobei das Anschlusselement (2) beschichtet wird.

3. Verfahren nach Anspruch 1 oder 2, wobei zum Beschichten ein Feststoff (14), vorzugsweise ein Pulver, aufgetragen wird.

4. Verfahren nach Anspruch 3, wobei das Pulver eine Partikelgröße von bis zu 60 µm, vorzugsweise von 1 bis 50 µm, und besonders bevorzugt von 1 bis 35 µm, hat.

5. Verfahren nach einem der Ansprüche 1 bis 4, wobei die Beschichtung (16) mittels thermischem Spritzen aufgebracht wird.

6. Verfahren nach Anspruch 5, wobei die Beschichtung (16) mittels Kaltgasspritzen aufgebracht wird.

7. Verfahren nach einem der Ansprüche 1 bis 6, wobei der Leiter (1) und das Anschlusselement (2) reibgeschweißt werden, vorzugsweise mittels Ultraschallschweißen verschweißt werden.

8. Verfahren nach einem der Ansprüche 1 bis 7, wobei der Leiter (1) Aluminium umfasst, und der Leiter vorzugsweise aus Aluminium oder einer Aluminiumlegierung besteht.

9. Verfahren nach einem der Ansprüche 1 bis 8, wobei der Leiter (1) einen LeiterQuerschnitt (6) von 5 bis 120 mm², vorzugsweise von 6 bis 80 mm², besonders bevorzugt von 30 bis 40 mm², hat.

10. Verfahren nach einem der Ansprüche 1 bis 9, wobei das Gemisch wenigstens ein unedles Metall enthält, das aus der Gruppe ausgewählt wird, die Zink, Aluminium, Zinn, Eisen, Nickel, Mangan sowie Oxide der genannten Metalle umfasst.

11. Verfahren nach einem der Ansprüche 1 bis 9, wobei die Kupferlegierung aus der Gruppe ausgewählt wird, die CuSn, CuZnₓSn_{y}, CuFe, CuNiSi, CuAl_{xy} sowie Messing umfasst.

12. Verfahren nach Anspruch 11, wobei die Kupferlegierung Messing ist und der Zinkgehalt des Messings zwischen 10 % und 70 %, vorzugsweise zwischen 20 % und 40 % und besonders bevorzugt bei 28 bis 32 % liegt.

13. Verfahren nach Anspruch 11 oder 12, wobei das Messing Blei und/oder wenigstens ein weiteres Legierungselement enthält.

14. Verfahren nach Anspruch 13, wobei das wenigstens eine weitere Legierungselement aus der Gruppe aus Aluminium, Eisen, Mangan, Nickel, Silizium und Zinn ausgewählt wird.

## Revendications

1. Procédé pour relier un conducteur (1) faisant partie d'un fil électrique (3) et comprenant un métal de base à un élément terminal (2) comprenant du cuivre, dans lequel le métal de base est un métal qui a, dans la série électrochimique des tensions, un potentiel d'électrode standard qui est plus faible que le potentiel d'électrode standard de l'hydrogène, et dans lequel le conducteur (1) et/ou l'élément terminal (2) est revêtu, au moins au niveau du joint de soudure (5, 10), avant que le conducteur (1) et l'élément terminal (2) ne soient soudés l'un sur l'autre,
**caractérisé en ce que**
le revêtement est effectué par application d'une couche solidement adhérente d'un alliage de cuivre ou d'un mélange comprenant du cuivre et au moins un métal de base.

2. Procédé selon la revendication 1, dans lequel l'élément terminal (2) est revêtu.

3. Procédé selon la revendication 1 ou 2, dans lequel un solide (14), de préférence une poudre, est appliqué pour le revêtement.

4. Procédé selon la revendication 3, dans lequel la poudre a une taille de particule allant jusqu'à 60 µm, de préférence de 1 à 50 µm et particulièrement de préférence de 1 à 35 µm.

5. Procédé selon l'une quelconque des revendications 1 à 4, dans lequel le revêtement (16) est appliqué au moyen d'une pulvérisation thermique.

6. Procédé selon la revendication 5, dans lequel le revêtement (16) est appliqué au moyen d'une pulvérisation de gaz à froid.

7. Procédé selon l'une quelconque des revendications 1 à 6, dans lequel le conducteur (1) et l'élément terminal (2) sont soudés par friction, de préférence soudés au moyen d'un soudage par ultrasons.

8. Procédé selon l'une quelconque des revendications 1 à 7, dans lequel le conducteur (1) comprend de l'aluminium, dans lequel le conducteur est constitué de préférence par de l'aluminium ou un alliage d'aluminium.

9. Procédé selon l'une quelconque des revendications 1 à 8, dans lequel le conducteur (1) a une section transversale conductrice (6) de 5 à 120 mm², de préférence de 6 à 80 mm², et particulièrement de préférence de 30 à 40 mm².

10. Procédé selon l'une quelconque des revendications 1 à 9, dans lequel le mélange a au moins un métal de base choisi dans le groupe comprenant le zinc, l'aluminium, l'étain, le fer, le nickel, le manganèse et des oxydes des métaux susmentionnés.

11. Procédé selon l'une quelconque des revendications 1 à 9, dans lequel l'alliage de cuivre est choisi dans le groupe comprenant CuSn, CuZnₓSN_{y}, CuFe, CuNiSi, CuAl_{xy} et le laiton.

12. Procédé selon la revendication 11, dans lequel l'alliage de cuivre est du laiton et la teneur en zinc du laiton est comprise entre 10 % et 70 %, de préférence entre 20 % et 40 % et particulièrement de préférence entre 28 et 32 %.

13. Procédé selon la revendication 11 ou 12, dans lequel le laiton comprend du plomb et/ou au moins un élément d'alliage supplémentaire.

14. Procédé selon la revendication 13, dans lequel ledit au moins un élément d'alliage supplémentaire est choisi dans le groupe constitué par l'aluminium, le fer, le manganèse, le nickel, le silicium et l'étain.
